# EUROPÄISCHE PATENTSCHRIFT

(11) **EP 0 978 097 B1**
(45) Veröffentlichungstag und Bekanntmachung des Hinweises auf die Patenterteilung: **16.08.2001**
(21) Anmeldenummer: 98931940.5
(22) Anmeldetag: 18.04.1998
(51) Int. Cl.: G06T 3/40

(54) **VERFAHREN ZUR GRÖSSENÄNDERUNG VON STRICHELEMENTEN**
METHOD FOR MODIFYING THE SIZE OF LINE ELEMENTS
PROCEDE POUR MODIFIER LA DIMENSION D'ELEMENTS A TRAITS

(30) Priorität: 21.04.1997 DE 19716445
(43) Veröffentlichungstag der Anmeldung: 09.02.2000
(73) Patentinhaber: Heidelberger Druckmaschinen Aktiengesellschaft, 69115 Heidelberg (DE)
(72) Erfinder: WEIDLICH, Ernst-Rudolf, Gottfried, D-24159 Kiel (DE)
(86) Internationale Anmeldenummer: DE9801083
(87) Internationale Veröffentlichungsnummer: WO9848380

(56) Entgegenhaltungen:
- EP-A- 0 610 928
- EP-A- 0 708 415
- DE-A- 19 526 529
- US-A- 3 573 789
- US-A- 4 847 641

## Beschreibung

Die Erfindung bezieht sich auf das Gebiet der elektronischen Bildverarbeitung und betrifft ein Verfahren zur Größenänderung von positiven und negativen Strichelementen, insbesondere von Schriftzeichen, auf einer zu reproduzierenden schwarz/ weißen oder farbigen Druckseite.

Die elektronische Bildverarbeitung besteht im wesentlichen aus der Bildeingabe, der Bildbearbeitung und der Bildausgabe.

Bei der Bildeingabe werden zur Herstellung einer schwarz/weißen Druckseite zunächst durch optoelektronische pixel- und zeilenweisen Abtastung von einzelnen Bildvorlagen (Halbtonvorlagen) und Textvorlagen (Strichvorlagen) mit einem Schwarz/Weiß-Scanner Dichtewerten (D) für die in den Vorlagen abgetasteten Pixel gewonnen.

Zur Herstellung einer farbigen Druckseite werden durch optoelektronische pixelund zeilenweise Abtastung von farbige Bildvorlagen und farbigen Textvorlagen mit einem Farbscanner Farbwerte (R, G, B) gewonnen, welche die Farbanteile "Rot", "Grün" und "Blau" der in den farbigen Vorlagen abgetasteten Pixel repräsentieren. Die Farbwerte (R, G, B) werden nach den Gesetzmäßigkeiten der subtraktiven Farbmischung in die Farbauszugswerte (C, M, Y, K) umgewandelt, welche die Farbdichtewerte der im späteren Druckprozeß verwendeten Druckfarben "Cyan" (C), "Magenta" (M), "Gelb" (Y) und "Schwarz" (K).

Die bei der Bildeingabe gewonnenen Dichtewerte (D) bzw. Farbauszugswerte (Y, M, Y, K) werden digitalisiert und als Bilddatendateien und Textdatendateien für die nachfolgende Bildbearbeitung gespeichert.

Bei der Bildbearbeitung in einer Workstation wird zunächst eine elektronische Seitenmontage der Bilder und Texte zu einer Druckseite nach einem Layoutplan unter visueller Kontrolle auf einem Monitor durchgeführt, indem die Bilddatendatei und die Textdatendatei zu einer Gesamtdatendatei der Druckseite zusammengerechnet und gespeichert werden. Die zur Seitenmontage benötigten Texte und Textdateien können auch von einem Operator in der Workstation generiert werden. Die Bildbearbeitung umfaßt außerdem Gradationskorrekturen und gegebenenfalls Farbkorrekturen und Farbretuschen.

Nach der Bildbearbeitung erfolgt die Bildausgabe mit einem geeigneten Bildausgabegerät, beispielsweise mit einem Farbrecorder zur Aufzeichnung von Farbauszügen für den Offsetdruck oder mit einer elektronischen Garviermaschine zur Gravur von Druckzylindern für den Tiefdruck.

Die Texte einer Druckseite enthalten im allgemeinen positive und/oder negative Strichelemente oder Schriftzeichen. Positive Strichelemente weisen einen höheren Dichtewert als der Dichtewert des Hintergrundes auf, während negative Strichelemente einen geringeren Dichtewert gegenüber dem Dichtewert des Hintergrundes haben.

In der Praxis gehen gelegentlich feine Strichelemente im Druck verloren oder werden nur unzureichend wiedergegeben. Es besteht daher die Forderung, feine Strichelemente bei der Bildbearbeitung derart zu verbreitern, daß sie im Druck gut lesbar reproduziert werden.

Herkömmliche Verfahren zur Größenänderung von positiven und negativen Strichelementen auf einer Druckseite haben den Nachteil, daß auf einer Druckseite gleichzeitig nur eine Art von Strichelementen in der Größe geändert werden kann, da beispielsweise eine Verbreiterung von positiven Strichelementen zu einer unerwünschten Verschmälerung von negativen Strichelementen führt.

Aufgabe der Erfindung ist es daher, ein Verfahren zur Größenänderung von positiven und/oder negativen Strichelementen, insbesondere von Schriftzeichen, auf einer zu reproduzierenden schwarz/weißen oder farbigen Druckseite derart zu verbessern, daß sowohl positive als auch negative Strichelemente auf einer Druckseite unabhängig von den jeweiligen Dichtewerten der Strichelemente optimal reproduziert werden.

Diese Aufgabe wird bezüglich einer schwarz/weißen Druckseite durch die Merkmafe des Anspruchs 1 und bezüglich einer farbigen Druckseite durch die Merkmale des Anspruchs 9 gelöst.

Vorteilhafte Ausgestaltungen und Weiterbildungen des Verfahrens sind in den Unteransprüchen angegeben.

Das Verfahren wird nachfolgend anhand der Fig. 1 bis 10 näher erläutert.

Es zeigen:
- Fig. 1: ein Entscheidungsfenster mit einem Kennungsfeld auf einer Druckseite bei pixelweiser Verschiebung über die Druckseite,
- Fig. 2: ein Entscheidungsfenster mit einem Kennungsfeld auf einer Druckseite bei kachelförmiger Verschiebung über die Druckseite,
- Fig. 3: ein Entscheidungsfenster mit einem Kennungsfeld auf einer Druckseite bei überlappender Verschiebung über die Druckseite,
- Fig. 4: charakteristische Histogramme für positive und negative Strichelemente,
- Fig. 5: charakteristische Einzelhistogramme der prozentualen Farbanteile für ein positives Strichelement,
- Fig. 6: ein aus den gewichteten Farbanteilen gebildetes Gesamthistogramm für ein positives Strichelement,
- Fig.7: ein quadratische Kopierfenster mit einem zentralen Substitutionsfeld,
- Fig. 8: ein modifiziertes Kopierfenster,
- Fig. 9: ein Beispiel für die Verbreiterung eines positiven Strichelementes und
- Fig. 10: ein verbreitertes positives Strichelement.

Das erfindungsgemäße Verfahren zur Größenänderung von positiven und/oder negativen Strichelementen auf einer schwarz/weißen oder farbigen Druckseite anhand der Gesamtdatendatei der Druckseite besteht im wesentlichen aus zwei Verfahrensschritten [**A**] und [**B**].

Bei der Bildbearbeitung in einer Workstation wird die Gesamtdatendatei, wie bereits in der Beschreibungseinleitung erwähnt, aus einer Textdatendatei (line-work-Datei) oder aus der Kombination einer Textdatendatei mit einer Bilddatendatei (continous-tone-Datei) nach einem Layoutplan zu der Gesamtdatendatei der Druckseite zusammengerechnet und gespeichert.

Eine Druckseite ist in einzelne Pixel unterteilt, und jedes Strichelement der Druckseite besteht aus mindestens einem Pixel. In der Gesamtdatendatei einer schwarz/weißen Druckseite ist jedem Pixeln ein Dichtewert (D) für "Schwarz", "Weiß" oder "Grau" zugeordnet. In der Gesamtdatendatei einer farbigen Druckseite wird die Farbe jedes Pixels entweder durch Farbauszugswerte (C, M, Y, K) oder durch eine Farbnummer (F-Nr.) definiert. Die Farbauszugswerte (C, M, Y, K) eines Pixeis kennzeichnen die Farbdichten bzw. die Rasterpunktgrößen oder Rasterprozente der einzelnen Druckfarben "Cyan" (C), "Magenta" (M), "Gelb" (Y) und "Schwarz" (K), die verwendet werden müssen, um beim Übereinanderdruck die definierte Farbe des Pixels zu erzeugen. Die Farbnummer (F-Nr.) eines Pixels kennzeichnet eine zu druckende Mischfarbe als vorgegebene prozentuale Anteile der einzelnen Druckfarben "Cyan" (C), "Magenta" (M), "Gelb" (Y) und "Schwarz" (K).

in dem Verfahrensschritt [A] werden zunächst die Art (positiv; negativ) der auf der Druckseite befindlichen Strichelemente als Positiv/Negativ-Kennungen "N" oder "P" für jedes Pixel anhand der jeweiligen Gesamtdatendatei einer schwarz/weißen oder farbigen Druckseite festgestellt und für die Weiterverarbeitung gespeichert.

In einem ersten Schritt [**A**_{**1**}] wird ein Entscheidungsfenster (**1**) mit einem kleineren Kennungsfeld (2) definiert, das beispielsweise im Zentrum eines rechteckigen Entscheidungsfensters (1) liegt. Das Entscheidungsfenster (1) umfaßt eine vorgegebene Anzahl von Pixeln (3) einer zu untersuchenden Druckseite (4). Die Anzahl der Pixel (3) wird in Abhängigkeit von der jeweiligen Größe der in der Druckseite (4) enthaltenen Strichelemente (5) gewählt. Eine eindeutige Erkennung der Strichelemente (5) wird beispielsweise mit 100 x 100 Pixeln (3) innerhalb des Entscheidungsfensters (1) erreicht. Das Kennungsfeld (2) enthält mindestens ein Pixel, im Ausführungsbeispiel ein einzelnes Pixel (3). Im Fall einer farbigen Druckseite (4) kann die Größe des Entscheidungsfensters (1) für die einzelnen Farbauszüge gleich oder unterschiedlich gewählt werden.

In einem zweiten Schritt [**A**_{**2**}] wird das Entscheidungsfenster (1) mit dem Kennungsfeld (2) zur Feststellung der Positiv/Negativ-Kennung für jedes Pixel (3) der Druckseite (4) zeilenweise über die Gesamtdatendatei der betreffenden Druckseite (3) verschoben, was vorstellungsmäßig einer Verschiebung des Entscheidungsfensters (1) und des Kennungsfeldes (2) über die Druckseite (4) entspricht.

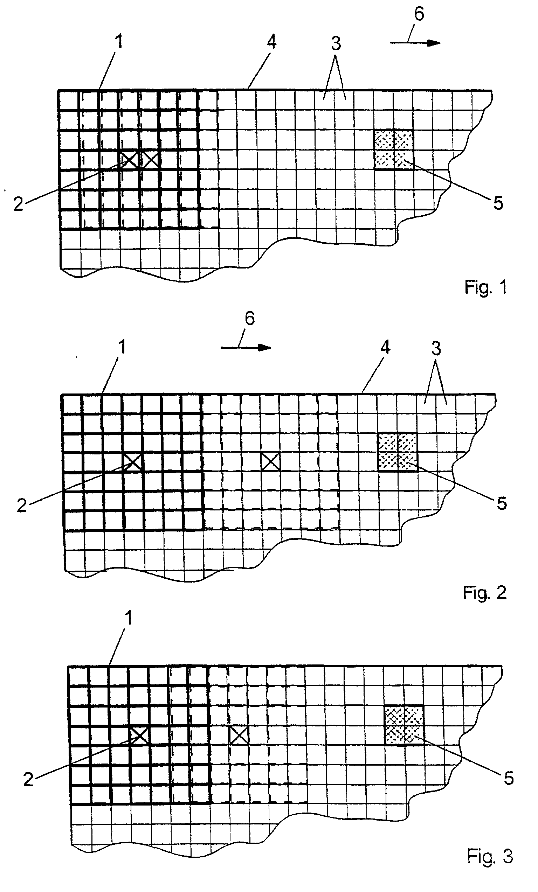

Fig. 1 zeigt ausschnittsweise eine in Pixel (3) unterteilte Druckseite (4) mit einem Strichelement (5). Dargestellt ist außerdem ein über die Druckseite (4) verschiebares Entscheidungsfenster (1), das im Zentrum ein aus einem Pixel bestehendes Kennungsfeld (2) aufweist.

Die Verschiebung des Entscheidungsfensters (1) mit dem Kennungsfeld (2) über die Druckseite (4) kann auf verschiedene Art und Weise erfolgen.

Bei einer ersten Ausführungsform wird das Entscheidungsfenster (1), wie in Fig. 1 dargestellt, schrittweise von Pixel (3) zu Pixel (3) in Zeilenrichtung (6) und nach einer Zeile senkrecht dazu zur nächsten Zeile verschoben, so daß für jedes Pixel (3) eine Positiv/Negativ-Kennung ermittelt wird. Bei dieser Ausführungsform wird zwar eine genaue Auswertung des Entscheidungsfensters (1) erreicht.

Bei einer in Fig. 2 dargestellten zweiten Ausführungsform wird das Entscheidungsfenster (1) jeweils schrittweise um seine Ausdehnung in Zeilenrichtung (6) und senkrecht dazu verschoben, so daß das Entscheidungsfenster (1) in Form von aneinanderstoßenden Kacheln verschoben wird. In diesem Fall wird nur für entsprechend der Fensterausdehnung beabstandete Pixel (3) eine Positiv/Negativ-Kennung ermittelt und den dazwischen liegenden Pixeln (3) jeweils die ermittelte Positiv/Negativ-Kennung der am nächsten liegenden Pixel (3) zugeordnet. Bei dieser Ausführungsform ergibt sich eine kürzer Rechenzeit, die aber auf Kosten der Genauigkeit erreicht wird.

Fig. 3 zeigt eine dritte Ausführungsform als Kompromiß zwischen der ersten und zweiten Ausführungsform. Bei der dritten Ausführungsform wird jedes n-te Pixel (3) festgelegt, bei dem eine Positiv/Negativ-Kennung durchgeführt werden soll, und das Entscheidungsfenster (1) wird entsprechend überlappend verschoben.

Falls das Entscheidungsfenster (1) bei der Verschiebung über einen Rand der Druckseite (4) hinausragen sollte, sind in dem über den Rand hinausragenden Bereich des Entscheidungsfensters (1) keine Werte zur Auswertung vorhanden. In diesem Fall können die fehlenden Werte durch Spiegelung der in dem anderen Bereich des Entscheidungsfensters (1) vorhandenen Werte an dem jeweiligen Rand der Druckseite (4) gewonnen werden.

In einem dritten Schritt [**A**_{**3**}] wird in jeder Position des verschobenen Entscheidungsfensters (1) und des Kennungsfeldes (2) auf der Druckseite (4) für jedes momentan im Kennungsfeld (2) liegende Pixel (3) entschieden, ob es Bestandteil eines positiven oder negativen Strichelementes (5) oder aber überhaupt kein Bestandteil eines Strichelementes (5) auf der Druckseite (4) ist. In Abhängigkeit von der getroffenen Entscheidung wird dann dem betreffenden Pixel (3) eine Positiv/Negativ-Kennung zugeordnet.

Die Entscheidung über die Positiv/Negativ-Kennung eines im Kennungsfeld (2) liegendes Pixels (3) erfolgt im Fall einer schwarz/weißen Druckseite (4) durch Auswertung der Dichtewerte (D) der Umgebung, nämlich derjenigen Pixel (3), die in jeder Fensterposition innerhalb des Entscheidungsfensters (1) liegen und im Fall einer farbigen Druckseite (3) durch Auswertung der entsprechenden Farbanteile in Form der Farbauszugswerte (C, M, Y, K) oder der Farbnummern (F-Nr.).

### Auswertung der Dichtewerte (D) einer schwarz/weißen Druckseite:

In jeder Fensterposition wird zunächst die Häufigkeitsverteilung (H) der Dichtewerte (D) bzw. eines definierten Dichtewertebereiches der innerhalb des Entscheidungsfensters (1) liegenden Pixel (3) als Histogramm berechnet, wobei für die Auswertung im wesentlichen die größten und geringsten Häufigkeiten H von Bedeutung sind.

Zur Ermittlung der Positiv/Negativ-Kennung des betreffenden Pixels (3) wird dann die Häufigkeitsverteilung (H) der Dichtewerte (D) einer schwarz/weißen Druckseite nach folgenden Entscheidungskriterien ausgewertet.

Sind die Dichtewerte (D_{H}) des Hintergrundes kleiner als die anderen Dichtewerte (D_{S}) im Entscheidungsfenster (1) und ist die Häufigkeit (H_{H}) der Dichtewerte (D_{H}) des Hintergrundes größer im Vergleich zu der Häufigkeit (H_{S}) der anderen Dichtewerte (D_{S}), handelt es sich um ein Pixel (3) eines positiven Strichelementes (5), und dem Pixel (3) wird eine entsprechende Positiv-Kennung zugeordnet.

Sind die Dichtewerte (D_{H}) des Hintergrundes dagegen größer als die anderen Dichtewerte (D_{S}) im Entscheidungsfenster (1) und ist die Häufigkeit (H_{H}) der Dichtewerte (D_{H}) des Hintergrundes kleiner im Vergleich zu der Häufigkeit (H_{S}) der anderen Dichtewerte (D_{S}), handelt es sich um ein Pixel (3) eines negativen Strichelementes (5), und dem Pixel (3) wird eine entsprechende Negativ-Kennung zugeordnet.

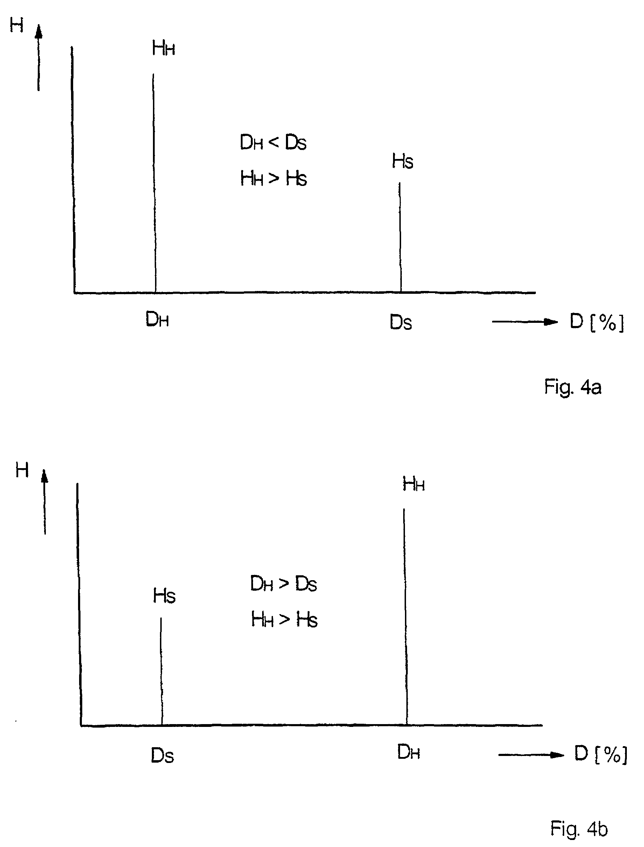

Fig. 4 zeigt zwei charakteristische Histogramme H (D) für ein positives Strichelement auf einem hellen Hintergrund mit D_{H} < D_{S} und H_{H} > H_{S} (Fig. 4a) und für ein negatives Strichelement auf einem dunklen Hintergrund D_{H} > D_{S} und H_{H} > H_{S} (Fig. 4b).

### Auswertung der Farbauszugswerte (C, M, Y, K) einer farbigen Druckseite:

In jeder Fersterposition werden zunächst für jeden Farbauszug getrennt die Häufigkeitsverteilungen der in dem Entscheidungsfenster (1) vorkommenden Farbauszugswerte (C, M, Y, K) als Einzelhistogramme H_{C} (C), H_{M} (M), H_{Y} (Y) und H_{K} (K) festgestellt.

Zur Ermittlung der Positiv/Negativ-Kennung des im Kennungsfeld (2) liegenden Pixels (3) des Entscheidungsfensters (1) in jeder Fensterposition kann mindestens eines der Einzelhistogramme der Farbauszüge, vorzugsweise alle vier Einzelhistogramme der Farbauszüge getrennt, ausgewertet werden.

Abweichend davon kann aus allen vier Einzelhistogrammen H_{C} (C), H_{M} (M), H_{Y} (Y) und H_{K} (K) ein Gesamthistogramm H_{CMYK} (C, M, Y, K) erstellt und dieses ausgewertet werden.

Zur Generierung des Gesamthistogramms H_{CMYK} (C, M, Y, K) werden die Farb-(C, M, Y, K) zur Normierung der Schwärzung mit unterschiedlichen Gewichtungskoeffizienten (G) nach folgenden Gleichungen gewichtet.
C* = G_{C} x C
M* = G_{M} x M
Y* = G_{Y} x Y
K* = G_{K} x K

Nach der Farbtheorie und dem jeweiligen Druckprozeß werden beispielsweise folgende Gewichtungskoeffizienten (G) gewählt:
G_{C} = 1,00
G_{M} = 0,33
G_{Y} = 0,16
G_{K} = 1,00

Anschließend wird für jeden Farbauszugswert (C, M, Y, K) durch Aufsummieren der zugehörigen gewichteten Farbauszugswerte (Y*, M*, Y*, K*) das für alle Farbauszüge gemeinsames Gesamthistogramm H_{CMYK} (C, M, Y, K) ermittelt.

Die Auswertung der Einzelhistogramme oder des Gesamthistogramms erfolgt nach den oben angegebenen Entscheidungskriterien für eine schwarz/weiße Druckseite.

### Auswertung der Farbnummern (F-Nr.) einer farbigen Druckseite:

Die Farbnummer, z.B. von F₁ bis F₂₅₅, eines Pixels kennzeichnet eine zu druckende Mischfarbe als vorgegebene prozentuale Farbanteile der Einzelfarben "Cyan" (C), "Magenta" (M), "Gelb" (Y) und "Schwarz" (K). Ein Beispiel gibt die ausschnittsweise wiedergegebene Tabelle:

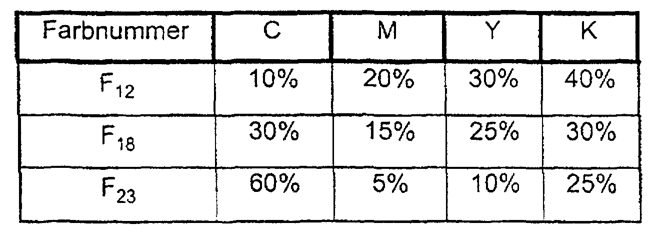

In jeder Fensterposition wird zunächst für jeden Farbanteil getrennt die Häufigkeitsverteilungen der in dem Entscheidungsfenster (1) vorkommenden Farbnummern (F-Nr.) als Einzelhistogramme H_{C} (F-Nr.), H_{M} (F-Nr.), H_{Y} (F-Nr.) und H_{K} (F-Nr.) ermittelt.

Danach werden die prozentualen Farbanteile (C, M, Y, K) der einzelnen Farbnummern (F-Nr.) zur Normierung der Schwärzung mit den oben angegebenen Gewichtungskoeffizienten (G) gewichtet.

Anschließend wird für jede Farbnummer (F-Nr.) durch Aufsummieren der zugehörigen gewichteten prozentualen Farbanteile (Y*, M*, Y*, K*) das für alle Farbanteile gemeinsames Gesamthistogramm H_{CMYK} (F-Nr.) ermittelt, das wiederum nach den oben angegebenen Entscheidungskriterien für eine schwarz/weiße Druckseite zur Ermittlung der Positiv/Negativ-Kennung des betreffenden Pixels (3) ausgewertet wird.

In einem Beispiel ergeben sich für die Farbnummer F₁₂ mit den in der Tabelle angegebenen prozentualen Farbanteilen (C, M, Y, K) und mit den Gewichtungskoeffizienten (G_{C}, G_{M}, G_{Y}, G_{K}) die gewichtete prozentualen Farbanteile C* = 4,6%, M* = 6,6%, Y* = 5,8% und K* = 40,0%. Durch Aufsummieren dieser gewichteten prozentualen Farbanteile ergibt sich dann z.B. für die Farbnummer F₁₂ ein Wert von 57% als gewichteter Schwarzwert aus allen Farbanteilen..

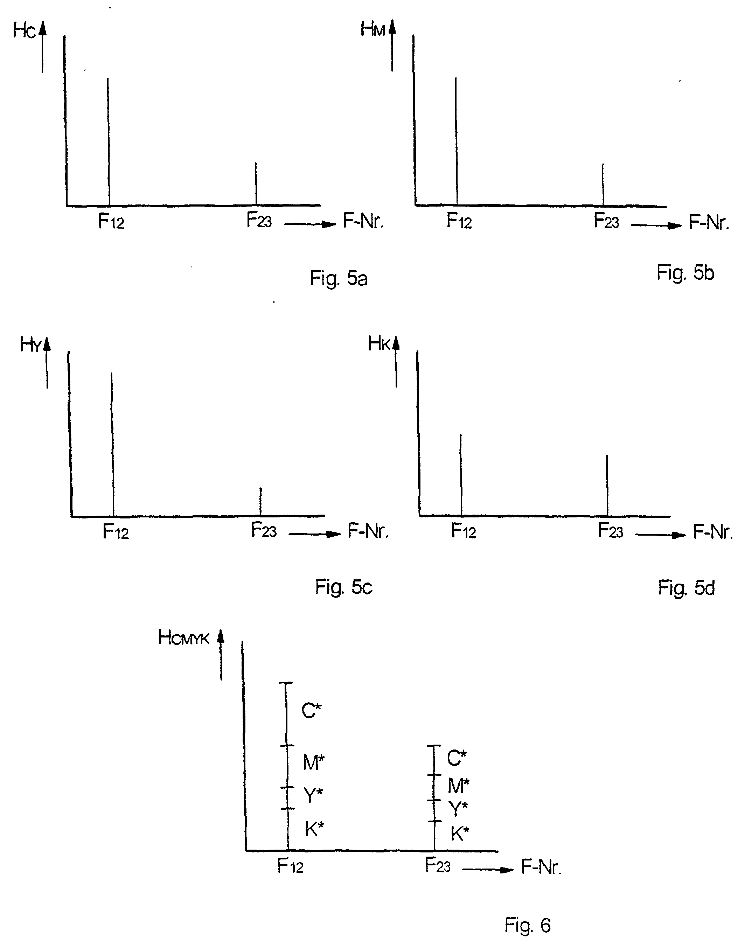

Fig. 5 zeigt charakteristische Einzelhistogramme H_{C} (F-Nr.), H_{M} (F-Nr.), H_{Y} (F-Nr.) und H_{K} (F-Nr.) der einzelnen prozentualen Farbanteile (C, M, Y, K) für ein positives Strichelement, wobei z. B. die Farbnummer F₁₂ die Farbe des Hintergrundes und die Farbnummer F₂₁ die Farbe des Strichelementes (5) repräsentiert.

Fig. 6 zeigt das aus den gewichteten Farbanteilen (C*, M*, Y,* K*) gebildete Gesamthistogramm H_{CMYK} (F-Nr.) für ein positives Strichelement.

Alternativ zum zentralen Kennungsfeld (2) kann auch ein beliebiges Pixel (3) innerhalb des Entscheidungsfensters (1) als Kennungsfeld (2) definiert werden.

Die in dem Verfahrensschritt [A] ermittelten Positiv/Negativ-Kennungen für alle Pixel der Druckseite können vor dem Verfahrensschritt [B] ermittelt und zur Durchführung des Verfahrensschrittes [B] in Form einer Kennungs-Tabelle, in der jedem Pixel (3) der Druckseite (4) ein "P" oder "N" zugeordnet ist, gespeichert werden.

Alternativ dazu kann der Verfahrensschritt [A] mit einer zeitlichen Voreilung auch online mit dem Verfahrensschritt [B] durchgeführt werden.
In dem Verfahrensschritt [**B**] wird anhand der im Verfahrensschritt [**A**] ermittelten Positiv/Negativ-Kennungen für jedes Pixel (3) einer Druckseite (4) die Größenänderung der Strichelemente (5) auf der Druckseite (5) vorgenommen.

Die Schritte [**B**_{**1**}] bis [**B**_{**5**}] werden zunächst für eine schwarz/weiße Druckseite (4) erläutert.

In einem ersten Schritt [**B**_{**1**}] wird festgelegt, ob bei der Größenänderung eine Verbreiterung und/oder Verschmälerung der Strichelemente (5) erfolgen soll. Die Festlegung kann pauschal für eine gesamte Druckseite (4), für auswählbare Bereiche einer Druckseite (4) durch entsprechende Maskierung der Bereiche oder für jedes Strichelement (5) einer Druckseite (4) getrennt festgelegt werden. Im letzteren Fall wird jedem Pixel (3) einer Druckseite (4) eine entsprechende Kennung "Verbreiterung" oder "Verschmälerung" zugeordnet und für jedes Pixel (3) abrufbar gespeichert.

In einem zweiten Schritt [**B**_{**2**}] wird ein Kopierfenster (7) mit einer Anzahl Pixel (3) definiert, das ein kleineres mindestens ein Pixel (3) umfassendes Substitutionsfeld (7) enthält. Die Breite in Pixeln vom Substitutionsfeld (8) bis zum Rand des Kopierfensters (7) bestimmt die Breite der Größenänderung der Strichelemente (5) in Pixeln. Durch die beliebig wählbare Form des Kopierfensters (7) um das Substitutionsfeld (8) wird festgelegt, ob die Größenänderung an der gesamten Kontur der Strichelemente (5) oder nur an den Konturen in Textrichtung oder senkrecht dazu erfolgen soll. Beispielsweise erfolgt bei einer quadratischen symmetrischen Form des Kopierfensters (7) um das Substitutionsfeld (8) eine gleichmäßige Größenänderung an der gesamten Kontur der Strichelemente (5).

In einem dritten Schritt [**B**₃] wird das Kopierfenster (7) mit dem Substitutionsfeld (8) pixel- und zeilenweise über die schwarz/weiße Druckseite (4) verschoben.

In jeder Position des verschobenen Kopierfensters (7) und des Substitutionsfeldes (8) auf der schwarz/weißen Druckseite (4) werden der in das Substitutionsfeld (8) fallende Dichtewert (D_{Z}) und die Dichtewerte der Umgebung, nämlich die in das Kopierfenster (7) fallenden Dichtewerte (D_{U}), aufgerufen und die aufgerufenen Dichtewerte (D_{U}, D_{Z}) miteinander verglichen und zwar unter Berücksichtigung der in den Schritten [A₁] bis [A₃] ermittelten Positiv/Negativ-Kennung für das in das Substitutionsfeld (8) fallende Pixel (3) und der im Schritt [B₁] festgelegten Art der Größenänderung der Strichelemente (5).

In einem vierten Schritt [**B**_{**4**}] wird dann in jeder Position des verschobenen Kopierfensters (7) und des Substitutionsfeldes (8) anhand des Ergebnisses des Dichtewertevergleichs entschieden, ob der in dem Substitutionsfeld (8) vorhandene Dichtewert (D_{Z}) durch einen charakteristischen Dichtewert (D_{U}) der Pixel (3) des Kopierfensters (7) oder durch einen Anteil davon ersetzt werden soll oder nicht.

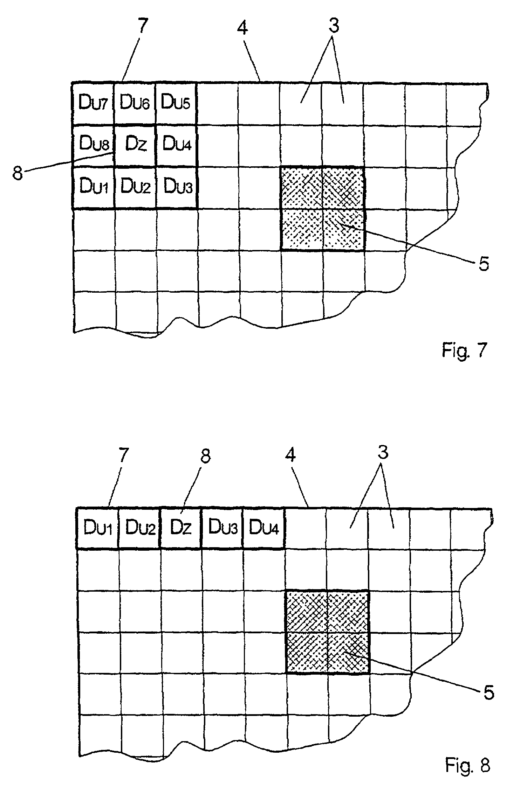

Fig. 7 zeigt ein quadratisches Kopierfenster (7) mit einem zentralen Substitutionsfeld (8) auf einer ausschnittsweise dargestellten Druckseite (4). Das Kopierfenster (7) umfaßt 8 Pixel (3) mit den Dichtewerten D_{U1} bis D_{U8}. Das Substitutionsfeld (8) umfaßt ein Pixel (3) mit dem Dichtewert D_{z}. Die Breite des Kopierfensters beträgt ein Pixel (3), so daß eine Größenänderung von einem Pixel (3) an jeder Kontur eines Strichelementes (5) erzielt werden kann.

Fig. 8 zeigt ein bezüglich des Substitutionsfeldes (8) unsymmetrisches Kopierfenster (7), welches 4 Pixel (3) mit den Dichtewerten D_{U1} bis D_{U4} aufweist. Das Substitutionsfeld (8) besteht aus einem Pixel (8) mit dem Dichtewert D_{Z}. Das Kopierfenster (7) hat eine Breite von zwei Pixeln (3), so daß nur an den senkrecht zur Textzeile verlaufenden Konturen der Strichelemente (5) eine Verbreiterung um ein Pixel (3) erzielt wird.

In einem fünften Schritt [**B**_{**5**}] wird anschließend in jeder Position des verschobenen Kopierfensters (7) in Abhängigkeit der im Schritt [B₄] getroffenen Entscheidung gegebenenfalls die Substitution des im Substitutionsfeld (8) vorhandene Dichtewert (D_{Z}) durch den ermittelten charakteristischen Dichtewert (D_{U}) der Pixel (3) des Kopierfensters (7) oder durch einen Anteil dieses Dichtewertes (D_{U}) vorgenommen.

Die Schritte [B₄] und [B₅] können auch gleichzeitig durchgeführt werden. In diesem Fall wird die Entscheidung über eine eventuelle Substitution nach Schritt [B₄] auf einer Kopie der Druckseite (4) und die Substitution nach Schritt [B₅] auf der Druckseite (4) selbst vorgenommen.

Die Verbreiterung und Verschmälerung von positiven und negativen Strichelementen (5) auf einer schwarz/weißen Druckseite (4) durch Übertragen oder Kopieren von charakteristischen Dichtewerten (D_{U}) des Kopierfeldes (7) in das Substitutionsfeld (8) in Abhängigkeit von den Ergebnissen beim Vergleich der Dichtewerte (D_{Z}, D_{U}) wird nachfolgend näher erläutert.

### Die Verbreiterung von positiven Strichelementen:

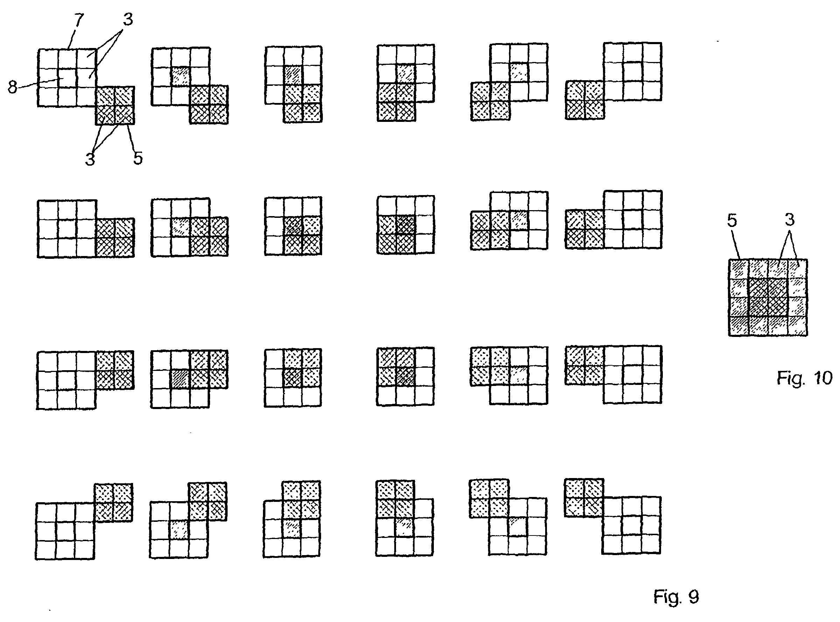

Bei einer Verbreiterung von positiven Strichelementen (5), die einer Verschmälerung von negativen Strichelementen (5) entspricht, wird in jeder Fensterposition der Dichtewert (D_{Z}) des Pixels des Substitutionsfeldes (8) immer dann durch den maximale Dichtewert (D_{Umax}) der Pixel des Kopierfensters (7) oder durch einen Anteil davon ersetzt, wenn bei dem Vergleich der Dichtewerte (D_{U}, D_{Z}) festgestellt wird, daß der Dichtewert (D_{U}) mindestens eines Pixels des Kopierfensters (7) größer als der Dichtewert (D_{Z}) des Substitutionsfeldes (8) ist. Fig. 9 zeigt am Beispiel einer Verbreiterung eines positiven Strichelementes (5) die in jeder Fensterposition getroffene Entscheidung, ob das in das in das jeweilige Substitutionsfeld (8) fallende Pixel (3) substituiert wird oder nicht.

Dargestellt ist ein aus 4 Pixeln (3) bestehendes positives Strichelement (5) und ein symmetrisches Kopierfenster (7) aus 8 Pixeln (3) mit einem zentralen Substitutionsfeld (8) aus einem Pixel (3), das pixelweise verschoben wird. Das symmetrische Kopierfenster (7) hat über den gesamten Umfang eine Breite von einem Pixel (3), so daß die Verbreiterung an der gesamten Kontur des Strichelementes (5) erfolgt. Eine Substitution wird dadurch angedeutet, daß das entsprechend Substitutionsfeld (8) schraffiert ist.

Fig. 10 zeigt das entsprechend verbreitere positive Strichelement (5).

### Die Verbreiterung von negativen Strichelementen:

Bei einer Verbreiterung von negativen Strichelementen (5), die einer Verschmälerung von positiven Strichelementen (5) entspricht, wird in jeder Fensterposition der Dichtewert (D_{Z}) des Pixels des Substitutionsfeldes (8) immer dann durch den minimalen Dichtewert (D_{Umin}) der Pixel des Kopierfensters (7) oder durch einem Anteil davon ersetzt, wenn bei dem Vergleich der Dichtewerte (D_{U}, D_{Z}) festgestellt wird, daß der Dichtewert (D_{U}) mindestens eines Pixels des Kopierfensters (7) kleiner als der Dichtewert (D_{Z}) des Substitutionsfeldes (8) ist.

Im Fall, daß eine Verbreiterung und/oder eine Verschmälerung an den Strichelementen (5) einer farbigen Druckseite (5) erfolgen soll, werden die Schritte [B₁] bis [B₅] auf jeden Farbauszug der farbigen Druckseite (5) getrennt angewendet, wobei anstelle der Dichtewerte (D) die entsprechenden Farbdichte- bzw. Farbauszugswerte (C, M, Y, K) herangezogen werden. Dabei können bei den einzelnen Farbauszügen durch variable Breiten des Kopierfensters (7) unterschiedliche Verbreiterungen und/oder Verschmälerungen der Strichelemente (5) erzielt werden. Ebenso können in den einzelnen Farbauszügen unterschiedliche Anteile der Farbauszugswerte (C, M, Y, K) in das Substitutionsfeld (8) kopiert werden.

## Patentansprüche

1. Verfahren zur Größenänderung von positiven und/oder negativen Strichelementen, insbesondere von Schriftzeichen, auf einer zu reproduzierenden schwarz/weißen Druckseite, wobei die Druckseite in Pixel unterteilt und jedem Pixel ein "Weiß", "Grau" oder "Schwarz" repräsentierender Dichtewert zugeordnet ist und jedes Strichelement aus mindestens einem Pixel besteht,
**dadurch gekennzeichnet,** daß
- die Art der Größenänderung (Verbreiterung/Verschmälerung) der Strichelemente (5) festgelegt wird,
- jedes Pixel (3) der schwarz/weißen Druckseite (4) durch Auswertung der Dichtewerte (D) darauf hin untersucht wird, ob es Bestandteil eines positiven oder negativen Strichelements (5) ist,
- für jedes Pixel (3), das Bestandteil eines positiven oder negativen Strichelements (5) ist, eine entsprechende Positiv-Kennung bzw. Negativ-Kennung ermittelt wird,
- um ein aus mindestens einem Pixel (3) bestehendes Substitutionsfeld (8) ein Kopierfenster (7) definiert wird, dessen Ausdehnung die gewünschte Größe der Verbreiterung und/oder Verschmälerung der Strichelemente (5) bestimmt,
- das Kopierfenster (7) mit dem Substitutionsfeld (8) über die schwarz/weiße Druckseite (4) pixelweise verschoben wird,
- in jeder Fensterposition auf der schwarz/weißen Druckseite (4) die Dichtewerte (D_{U}) der in das Kopierfenster (7) fallenden Pixel (3) mit dem Dichtewert (D_{Z}) des Substitutionsfeldes (8) verglichen werden,
- in jeder Fensterposition auf der schwarz/weißen Druckseite (4) für das Pixel (3) des Substitutionsfeldes (8) in Abhängigkeit von der festgelegten Art der Größenänderung, von der für das Pixel (3) des Substitutionsfeldes (8) ermittelten Positiv/Negativ-Kennung und von dem Ergebnis des Dichtewertevergleichs entschieden wird, ob der Dichtewert (D_{Z}) des Substitutionsfeldes (8) durch einen charakteristischen Dichtewert (Du) der Pixel (3) des Kopierfensters (7) oder durch einen Anteil davon ersetzt werden soll oder nicht und
- in jeder Fensterposition auf der schwarz/weißen Druckseite (4) gegebenenfalls der Dichtewert (D_{Z}) des Substitutionsfeldes (8) ersetzt wird.

2. Verfahren nach Anspruch 1, **dadurch gekennzeichnet,** daß bei einer Verbreiterung von positiven Strichelementen (5) bzw. einer Verschmälerung von negativen Strichelementen (5) in jeder Fensterposition auf der schwarz/weißen Druckseite (4) der Dichtewert (D_{Z}) des Pixels (3) des Substitutionsfeldes (8) durch einen charakteristischen Dichtewert (D_{U}) der Pixel (3) des Kopierfensters (7) ersetzt wird, falls bei dem Vergleich der Dichtewerte festgestellt wird, daß der Dichtewert (D_{U}) mindestens eines Pixels (3) des Kopierfensters (7) größer als der Dichtewert (D_{Z}) des Substitutionsfeldes (8) ist.

3. Verfahren nach Anspruch 2, **dadurch gekennzeichnet,** daß der charakteristische Dichtewert der Maximalwert der Dichtewerte (D_{U}) der Pixel (3) des Kopierfensters (7) ist.

4. Verfahren nach Anspruch 1, **dadurch gekennzeichnet,** daß bei einerVerbreiterung von negativen Strichelementen bzw. einer Verschmälerung von positiven Strichelementen in jeder Fensterposition auf der schwarz/weißen Druckseite (4) der Dichtewert (D_{Z}) des Pixels (3) des Substitutionsfeldes (8) durch einen charakteristischen Dichtewert (D_{U}) der Pixel (3) des Kopierfensters (7) ersetzt wird, falls bei dem Vergleich der Dichtewerte festgestellt wird, daß mindestens ein Dichtewert (D_{U}) der Pixel (3) des Kopierfensters (7) kleiner als der Dichtewert (D_{Z}) des Substitutionsfeldes (8) ist.

5. Verfahren nach Anspruch 4, **dadurch gekennzeichnet,** daß der charakteristische Dichtewert der Minimalwert der Dichtewerte (D_{U}) der Pixel (3) des Kopierfensters (7) ist.

6. Verfahren nach einem der Ansprüche 1 bis 5, **dadurch gekennzeichnet,** daß zur Ermittlung der Positiv/Negativ-Kennung der einzelnen Pixel (3) einer schwarz/weißen Druckseite (4)
- ein mehrere Pixel (3) umfassendes Entscheidungsfenster (1) definiert und über die schwarz/weiße Druckseite (4) verschoben wird,
- in jeder Fensterposition auf der schwarz/weißen Druckseite (4) die Häufigkeitsverteilung der Dichtewerte (D) der in das Entscheidungsfensters (1) fallenden Pixel (3) als Histogramm ermittelt wird und
- in jeder Fensterposition auf der schwarz/weißen Druckseite (4) durch Auswertung des Histogramms die Positiv/Negativ-Kennung mindestens eines der jeweils in das Entscheidungsfenster (1) fallenden Pixel (3) ermittelt wird.

7. Verfahren nach Anspruch 6, **dadurch gekennzeichnet,** daß bei der Auswertung der Histogramme ein innerhalb des Entscheidungsfensters (1) liegendes Strichelement (5) als positiv erkannt wird, wenn im Entscheidungsfenster (1) die Dichtewerte (D_{H}) des Hintergrundes der schwarz/weißen Druckseite (4) kleiner als die anderen Dichtewerte (D_{S}) sind und die Häufigkeit der Dichtewerte (D_{H}) des Hintergrundes größer im Vergleich zu der Häufigkeit der anderen Dichtewerte (D_{S}) sind.

8. Verfahren nach Anspruch 6, **dadurch gekennzeichnet,** daß bei der Auswertung der Histogramme ein innerhalb des Entscheidungsfensters (1) liegendes Strichelement (5) als negativ erkannt wird, wenn im Entscheidungsfenster (1) die Dichtewerte (D_{H}) des Hintergrundes der schwarz/weißen Druckseite (4) größer als die anderen Dichtewerte (D_{S}) sind und die Häufigkeit der Dichtewerte (D_{H}) des Hintergrundes kleiner im Vergleich zu der Häufigkeit der anderen Dichtewerte (D_{S}) sind.

9. Verfahren zur Größenänderung von positiven und/oder negativen Strichelementen, insbesondere von Schriftzeichen, auf einer in Form von Farbauszügen vorliegenden zu reproduzierenden farbigen Druckseite, wobei jeder Farbauszug in Pixel unterteilt und jedem Pixel ein den jeweiligen Farbanteil repräsentierender Farbauszugswert (C, M, Y, K) zugeordnet ist, **dadurch gekennzeichnet,** daß
- die Art der Größenänderung (Verbreiterung/Verschmälerung) der Strichelemente (5) festgelegt wird,
- jedes Pixel (3) der einzelnen Farbauszüge der farbigen Druckseite durch Auswertung der Farbanteile darauf hin untersucht wird, ob es Bestandteil eines positiven oder negativen Strichelements (5) ist,
- für jedes Pixel (3), das Bestandteil eines positiven oder negativen Strichelements (5) ist, eine entsprechende Positiv-Kennung bzw. Negativ-Kennung ermittelt wird,
- um ein aus mindestens einem Pixel (3) bestehendes Substitutionsfeld (8) ein Kopierfenster (7) definiert wird, dessen Ausdehnung die gewünschte Größe der Verbreiterung und/oder Verschmälerung der Strichelemente (5) bestimmt,
- das Kopierfenster (7) mit dem Substitutionsfeld (8) pixelweise über die einzelnen Farbauszüge getrennt verschoben wird,
- in jeder Fensterposition auf jedem der Farbauszüge die zugehörigen Farbauszugswerte (C_{U}, M_{U},Y_{U},K_{U}) der in das Kopierfenster (7) fallenden Pixel (3) mit dem entsprechenden Farbauszugswert (C_{Z}, M_{Z}, Y_{Z}, K_{Z}) des Substitutionsfeldes (8) verglichen werden,
- in jeder Fensterposition auf jedem der Farbauszüge für das Pixel (3) des Substitutionsfeldes (8) in Abhängigkeit von der festgelegten Art der Größenänderung, von der für das Pixel (3) des Substitutionsfeldes (8) ermittelten Positiv/Negativ-Kennung und von dem Ergebnis des Vergleichs der Farbauszugswerte festgestellt wird, ob der Farbauszugswert (C_{Z}, M_{Z}, Y_{Z}, K_{Z}) des Substitutionsfeldes (8) durch einen charakteristischen Farbauszugswert (C_{U}, M_{U},Y_{U},K_{U}) der Pixel (3) des Kopierfensters (7) oder durch einen Anteil davon ersetzt werden soll oder nicht und
- in jeder Fensterposition in mindestens einem der Farbauszüge gegebenenfalls der entsprechende Farbauszugswert (C_{Z}, M_{Z}, Y_{Z}, K_{Z}) des Substitutionsfeldes (8) ersetzt wird.

10. Verfahren nach Anspruch 9, **dadurch gekennzeichnet,** daß bei einer Verbreiterung von positiven Strichelementen (5) bzw. einer Verschmälerung von negativen Sirichelementen (5) in jeder Fensterposition auf jedem der Farbauszüge der Farbauszugswert (C_{Z}, M_{Z}, Y_{Z}, K_{Z}) des Pixels (3) des Substitutionsfeldes (8) durch einen charakteristischen Farbauszugswert (C_{U}, M_{U}, Y_{U}, K_{U}) der Pixel (3) des Kopierfensters (7) ersetzt wird, falls bei dem Vergleich der Farbauszugswerte entschieden wird, daß der Farbauszugswert (C_{U}, M_{U}, Y_{U}, K_{U}) mindestens eines Pixels (3) des Kopierfensters (7) größer als der Farbauszugswert (C_{Z}, M_{Z}, Y_{Z}, K_{Z}) des Substitutionsfeldes (8) ist.

11. Verfahren nach Anspruch 10, **dadurch gekennzeichnet,** daß der charakteristischen Farbauszugswert der Maximalwert der Farbauszugswerte (C_{U}, M_{U}, Y_{U}, K_{U}) der Pixel (3) des Kopierfensters (7) ist.

12. Verfahren nach Anspruch 9, **dadurch gekennzeichnet,** daß bei einer Verbreiterung von negativen Strichelementen bzw. einer Verschmälerung von positiven Strichelementen in jeder Fensterposition auf jedem der Farbauszüge der Dichtewert (D_{Z}) des Pixels (3) des Substitutionsfeldes (8) durch einen charakteristischen Farbauszugswert (C_{U}, M_{U}, Y_{U}, K_{U}) der Pixel (3) des Kopierfensters (7) ersetzt wird, falls bei dem Vergleich der Farbauszugswerte festgestellt wird, daß mindestens ein Farbauszugswert (C_{U}, M_{U}, Y_{U}, K_{U}) der Pixel (3) des Kopierfensters (7) kleiner als der Farbauszugswert (C_{Z}, M_{Z}, Y_{Z}, K_{Z}) des Substitutionsfeldes (8) ist.

13. Verfahren nach Anspruch 12, **dadurch gekennzeichnet,** daß der charakteristische Farbauszugswert der Minimalwert der Farbauszugswerte (C_{U}, M_{U}, Y_{U}, K_{U}) der Pixel (3) des Kopierfensters (7) ist.

14. Verfahren nach einem der Ansprüche 9 bis 13, **dadurch gekennzeichnet,** daß zur Ermittlung der Positiv/Negativ-Kennungen der Pixel (3) der einzelnen Farbauszüge
- ein mehrere Pixel (3) umfassendes Entscheidungsfenster (1) definiert und über die einzelnen Farbauszüge getrennt verschoben wird,
- in jeder Fensterposition auf jedem der Farbauszüge die Häufigkeitsverteilungen der Farbauszugswerte (C, M, Y, K) der in das Entscheidungsfensters (1) fallenden Pixel (3) als Einzelhistogramme (H_{C}, H_{M}, H_{Y}, H_{K}) ermittelt werden und
- in jeder Fensterposition auf jedem der Farbauszüge durch Auswertung der Einzelhistogramme (H_{C}, H_{M}, H_{Y}, H_{K}) die Positiv/Negativ-Kennung mindestens eines der jeweils in das Entscheidungsfenster (1) fallenden Pixel (3) ermittelt wird.

15. Verfahren nach einem der Ansprüche 9 bis 13, **dadurch gekennzeichnet,** daß zur Ermittlung der Positiv/Negativ-Kennungen der Pixel (3) der einzelnen Farbauszüge
- ein mehrere Pixel (3) umfassendes Entscheidungsfenster (1) definiert und über die einzelnen Farbauszüge getrennt verschoben wird,
- in jeder Fensterposition auf jedem Farbauszug die Häufigkeitsverteilungen der Farbauszugswerte (C, M, Y, K) der in das Entscheidungsfenster (1) fallenden Pixel (3) als Einzelhistogramm (H_{C}, H_{M}, H_{Y}, H_{K}) ermittelt werden,
- die Farbauszugswerte(C, M, Y, K) der einzelnen Farbauszüge mit unterschiedlichen Korrekturfaktoren (G_{C}, G_{M}, G_{Y}, G_{K}) gewichtet werden,
- durch Addition der gewichteten Farbdichtewerte (C*, M*, Y*, K*) ein Gesamthistogramm (H_{CMYK}) für alle Farbauszüge ermittelt wird und
- in jeder Fensterposition durch Auswertung des Gesamthistogramms (H_{CMYK}) die Positiv/Negativ-Kennung mindestens eines der jeweils in das Entscheidungsfenster (1) fallenden Pixel (3) ermittelt wird.

16. Verfahren nach einem der Ansprüche 1 bis 15, **dadurch gekennzeichnet,** daß das Substitutionsfeld (8) im Zentrum des Kopierfensters (7) liegt.

17. Verfahren nach einem der Ansprüche 1 bis 16, **dadurch gekennzeichnet,** daß die Positiv/Negativ-Kennungen vor der Größenänderung der Strichelemente (5) ermittelt werden.

18. Verfahren nach einem der Ansprüche 1 bis 17, **dadurch gekennzeichnet,** daß
- das Entscheidungsfenster (1) pixelweise verschoben wird und
- in jeder Fensterposition durch Auswertung der betreffenden Histogramme die Positiv/Negativ-Kennung mindestens eines der in das Entscheidungsfenster (1) fallenden Pixel (3) ermittelt wird.

19. Verfahren nach einem der Ansprüche 1 bis 17, **dadurch gekennzeichnet,** daß
- das Entscheidungsfenster (1) pixelweise verschoben wird,
- in jeder Fensterposition durch Auswertung der betreffenden Histogramme die Positiv/Negativ-Kennung eines der in das Entscheidungsfenster (1) fallenden Pixel (3) ermittelt wird und
- die ermittelte Positiv/Negativ-Kennung auf alle Pixel (3) des Entscheidungsfensters (1) übertragen wird.

20. Verfahren nach einem der Ansprüche 1 bis 17, **dadurch gekennzeichnet,** daß
- in dem Entscheidungsfenster (1) ein mindestens ein Pixel (3) umfassendes zentrales Kennungsfeld (2) definiert wird,
- das Entscheidungsfenster (1) pixelweise verschoben wird und
- in jeder Fensterposition die Positiv/Negativ-Kennung für das in das Kennungsfeld (2) fallende Pixel (3) ermittelt wird.

21. Verfahren nach einem der Ansprüche 1 bis 17, **dadurch gekennzeichnet,** daß
- in dem Entscheidungsfenster (1) ein mindestens ein Pixel (3) umfassendes zentrales Kennungsfeld (2) definiert wird,
- das Entscheidungsfenster (1) jeweils um seine Ausdehnung verschoben wird,
- in jeder Fensterposition die Positiv/Negativ-Kennung für das in das jeweilige Kennungsfeld (2) fallende Pixel (3) ermittelt wird und
- den dazwischen liegenden Pixeln (3) die in den jeweiligen Fensterpositionen ermittelten Positiv/Negativ-Kennungen zugeordnet werden.

22. Verfahren nach einem der Ansprüche 1 bis 17, **dadurch gekennzeichnet,** daß
- in dem Entscheidungsfenster (1) ein mindestens ein Pixel (3) umfassendes zentrales Kennungsfeld (2) definiert wird,
- das Entscheidungsfenster (1) jeweils überlappend verschoben wird,
- in jeder Fensterposition die Positiv/Negativ-Kennung für das in das jeweilige Kennungsfeld (2) fallende Pixel (3) ermittelt wird und
- den dazwischen liegenden Pixeln (3) die in den jeweiligen Fensterpositionen ermittelten Positiv/Negativ-Kennungen zugeordnet werden.

## Claims

1. Method for changing the size of positive and/or negative line elements, in particular characters, on a black/white print page to be reproduced, in which the print page is divided up into pixels and a density value representing "white", "grey" or "black" is assigned to each pixel and each line element consists of at least one pixel,
**characterized in that**
- the nature of the change in size (widening/narrowing) of the line elements (5) is defined,
- every pixel (3) of the black/white print page (4) is examined to determine by evaluating the density values (D) whether it is a constituent of a positive or negative line element (5),
- for every pixel (3) that is a constituent of a positive or negative line element (5), a corresponding positive identification or negative identification is determined,
- a copying window (7) the extent of which determines the desired amount of widening and/or narrowing of the line elements (5) is defined around a substitution field (8) consisting of at least one pixel (3),
- the copying window (7) with the substitution field (8) is shifted pixel by pixel over the black/white print page (4),
- in every window position on the black/white print page (4) the density values (D_{U}) of the pixels (3) falling within the copying window (7) are compared with the density value (D_{Z}) of the substitution field (8),
- in every window position on the black/white print page (4) a decision is made for the pixel (3) of the substitution field (8), on the basis of the defined nature of the change in size, the positive/negative identification determined for the pixel (3) of the substitution field (8) and the result of the comparison of density values, as to whether the density value (D_{z}) of the substitution field (8) should or should not be replaced by a characteristic density value (D_{U}) of the pixels (3) of the copying window (7) or by a fraction thereof and
- in every window position on the black/white print page (4) the density value (D_{Z}) of the substitution field (8) is, if necessary, replaced.

2. Method according to Claim 1, **characterized in that** in the case of a widening of positive line elements (5) and/or a narrowing of negative line elements (5), in every window position on the black/white print page (4) the density value (D_{Z}) of the pixel (3) of the substitution field (8) is replaced by a characteristic density value (D_{U}) of the pixels (3) of the copying window (7), if it is determined in the comparison of density values that the density value (D_{U}) of at least one pixel (3) of the copying window (7) is greater than the density value (D_{Z}) of the substitution field (8).

3. Method according to Claim 2, **characterized in that** the characteristic density value is the maximum value of the density values (D_{U}) of the pixels (3) of the copying window (7).

4. Method according to Claim 1, **characterized in that** in the case of a widening of negative line elements and/or a narrowing of positive line elements, in every window position on the black/white print page (4) the density value (D_{Z}) of the pixel (3) of the substitution field (8) is replaced by a characteristic density value (D_{U}) of the pixels (3) of the copying window (7), if it is determined in the comparison of density values that at least one density value (D_{U}) of the pixels (3) of the copying window (7) is smaller than the density value (D_{Z}) of the substitution field (8).

5. Method according to Claim 4, **characterized in that** the characteristic density value is the minimum value of the density values (D_{U}) of the pixels (3) of the copying window (7).

6. Method according to any one of Claims 1 to 5, **characterized in that** in order to determine the positive/negative identification of the individual pixels (3) of a black/white print page (4)
- a decision window (1) containing a plurality of pixels (3) is defined and is shifted over the black/white print page (4),
- in every window position on the black/white print page (4) the frequency distribution of the density values (D) of the pixels (3) falling within the decision window (1) is determined as a histogram and
- in every window position on the black/white print page (4) the positive/negative identification of at least one of the pixels (3) falling within the decision window (1) is determined by evaluating the histogram.

7. Method according to Claim 6, **characterized in that** in the evaluation of the histograms a line element (5) lying within the decision window (1) is identified as positive if the density values (D_{H}) of the background of the black/white print page (4) in the decision window (1) are smaller than the other density values (D_{S}) and the frequency of the background density values (D_{H}) is higher than the frequency of the other density values (D_{S}).

8. Method according to Claim 6, **characterized in that** in the evaluation of the histograms a line element (5) lying within the decision window (1) is identified as negative if the density values (D_{H}) of the background of the black/white print page (4) in the decision window (1) are greater than the other density values (D_{S}) and the frequency of the background density values (D_{H}) is lower than the frequency of the other density values (D_{S}).

9. Method for changing the size of positive and/or negative line elements, in particular characters, on a colour print page for reproduction that is presented in the form of colour separations, in which each colour separation is divided up into pixels and a colour separation value (C, M, Y, K) representing each chromatic component is assigned to each pixel, **characterized in that**
- the nature of the change in size (widening/narrowing) of the line elements (5) is defined,
- every pixel (3) of the individual colour separations of the colour print page is examined to determine by evaluating the chromatic components whether it is a constituent of a positive or negative line element (5),
- for every pixel (3) that is a constituent of a positive or negative line element (5), a corresponding positive identification or negative identification is determined,
- a copying window (7) the extent of which determines the desired amount of widening and/or narrowing of the line elements (5) is defined around a substitution field (8) consisting of at least one pixel (3),
- the copying window (7) with the substitution field (8) is separately shifted pixel by pixel over the individual colour separations,
- in every window position on each of the colour separations the colour separation values (C_{U}, M_{U}, Y_{U}, K_{U}) of the pixels (3) falling within the copying window (7) are compared with the corresponding colour separation value (C_{Z}, M_{Z}, Y_{Z}, K_{Z}) of the substitution field (8),
- in every window position on each of the colour separations a determination is made for the pixel (3) of the substitution field (8), on the basis of the defined nature of the change in size, the positive/negative identification determined for the pixel (3) of the substitution field (8) and the result of the comparison of colour separation values, as to whether the colour separation value (C_{Z}, M_{Z}, Y_{Z}, K_{Z}) of the substitution field (8) should or should not be replaced by a characteristic colour separation value (C_{U}, M_{U}, Y_{U}, K_{U}) of the pixels (3) of the copying window (7) or by a fraction thereof and
- in every window position in at least one of the colour separations the corresponding colour separation value (C_{Z}, M_{Z}, Y_{Z}, K_{Z}) of the substitution field (8) is, if necessary, replaced.

10. Method according to Claim 9, **characterized in that** in the case of a widening of positive line elements (5) and/or a narrowing of negative line elements (5), in every window position on each of the colour separations the colour separation value (C_{Z}, M_{Z}, Y_{Z}, K_{Z}) of the pixel (3) of the substitution field (8) is replaced by a characteristic colour separation value (C_{U}, M_{U}, Y_{U}, K_{U}) of the pixels (3) of the copying window (7), if it is determined in the comparison of colour separation values that the colour separation value (C_{U}, M_{U}, Y_{U}, K_{U}) of at least one pixel (3) of the copying window (7) is greater than the colour separation value (C_{Z}, M_{Z}, Y_{Z}, K_{Z}) of the substitution field (8).

11. Method according to Claim 10, **characterized in that** the characteristic colour separation value is the maximum value of the colour separation values (C_{U}, M_{U}, Y_{U}, K_{U}) of the pixels (3) of the copying window (7).

12. Method according to Claim 9, **characterized in that** in the case of a widening of negative line elements and/or a narrowing of positive line elements, in every window position on each of the colour separations the density value D_{Z} of the pixel (3) of the substitution field (8) is replaced by a characteristic colour separation value (C_{U}, M_{U}, Y_{U}, K_{U}) of the pixels (3) of the copying window (7), if it is determined in the comparison of colour separation values that at least one colour separation value (C_{U}, M_{U}, Y_{U}, K_{U}) of the pixels (3) of the copying window (7) is smaller than the colour separation value (C_{Z}, M_{Z}, Y_{Z}, K_{Z}) of the substitution field (8).

13. Method according to Claim 12, **characterized in that** the characteristic colour separation value is the minimum value of the colour separation values (C_{U}, M_{U}, Y_{U}, K_{U}) of the pixels (3) of the copying window (7).

14. Method according to any one of Claims 9 to 13, **characterized in that** in order to determine the positive/negative identifications of the pixels (3) of the individual colour separations
- a decision window (1) containing a plurality of pixels (3) is defined and is separately shifted over the individual colour separations,
- in every window position on each of the colour separations the frequency distributions of the colour separation values (C, M, Y, K) of the pixels (3) falling within the decision window (1) are determined as individual histograms (H_{C}, H_{M}, H_{Y}, H_{K}) and
- in every window position on each of the colour separations the positive/negative identification of at least one of the pixels (3) falling within the decision window (1) is determined by evaluating the individual histograms (H_{C}, H_{M}, H_{Y}, H_{K}).

15. Method according to any one of Claims 9 to 13, **characterized in that** in order to determine the positive/negative identifications of the pixels (3) of the individual colour separations
- a decision window (1) containing a plurality of pixels (3) is defined and is separately shifted over the individual colour separations,
- in every window position on each colour separation the frequency distributions of the colour separation values (C, M, Y, K) of the pixels (3) falling within the decision window (1) are determined as individual histograms (H_{C}, H_{M}, H_{Y}, H_{K}),
- the colour separation values (C, M, Y, K) of the individual colour separations are weighted with differing correction factors (G_{C}, G_{M}, G_{Y}, G_{K}),
- a total histogram (H_{CMYK}) for all colour separations is obtained by summing the weighted colour density values (C*, M*, Y*, K*) and
- in every window position the positive/negative identification of at least one of the pixels (3) falling within the decision window (1) is determined by evaluating the total histogram (H_{CMYK}).

16. Method according to any one of Claims 1 to 15, **characterized in that** the substitution field (8) is located at the centre of the copying window (7).

17. Method according to any one of Claims 1 to 16, **characterized in that** the positive/negative identifications are determined before the change in size of the line element (5).

18. Method according to any one of Claims 1 to 17, **characterized in that**
- the decision window (1) is shifted pixel by pixel and
- in every window position the positive/negative identification of at least one of the pixels (3) falling within the decision window (1) is determined by evaluating the histograms concerned.

19. Method according to any one of Claims 1 to 17, **characterized in that**
- the decision window (1) is shifted pixel by pixel,
- in every window position the positive/negative identification of one of the pixels (3) falling within the decision window (1) is determined by evaluating the histograms concerned and
- the positive/negative identification thus determined is transferred to all pixels (3) of the decision window (1).

20. Method according to any one of Claims 1 to 17, **characterized in that**
- a central identification field (2) containing at least one pixel (3) is defined within the decision window (1),
- the decision window (1) is shifted pixel by pixel and
- in every window position the positive/negative identification for the pixel (3) falling into the identification field (2) is determined.

21. Method according to any one of Claims 1 to 17, **characterized in that**
- a central identification field (2) containing at least one pixel (3) is defined within the decision window (1),
- the decision window (1) is shifted in steps each corresponding to the extent of the window,
- in every window position the positive/negative identification for the pixel (3) falling into the identification field (2) is determined and
- the positive/negative identifications determined in the individual window positions are assigned to the pixels (3) located in between.

22. Method according to any one of Claims 1 to 17, **characterized in that**
- a central identification field (2) containing at least one pixel (3) is defined within the decision window (1),
- the decision window (1) is shifted in overlapping steps,
- in every window position the positive/negative identification for the pixel (3) falling into the identification field (2) is determined and
- the positive/negative identifications determined in the individual window positions are assigned to the pixels (3) located in between.

## Revendications

1. Procédé de modification de la taille d'éléments de traits positifs et/ou négatifs, notamment de signes d'écriture sur une page d'impression noir/blanc à reproduire,
la page d'impression étant subdivisée en pixels et à chaque pixel étant attribuée une valeur de densité représentative « blanc », « gris » ou « noir », chaque élément de trait se composant d'au moins un pixel,
caractérisé en ce qu'
- on fixe la nature de la variation de taille (élargissement/rétrécissement) des éléments de traits (5),
- à chaque pixel (3) de la face imprimée noir/blanc (4), par l'exploitation des valeurs de densité (D), on examine s'il fait partie d'un élément de trait (5) positif ou négatif,
- pour chaque pixel (3) qui appartient à un élément de trait positif ou négatif (5), on détermine une caractéristique correspondante positive ou négative,
- autour d'un champ de substitution (8) formé d'au moins un pixel (3) on définit une fenêtre de copie (7) dont l'importance définit la taille souhaitée de l'extension et/ou du rétrécissement des éléments de traits (5),
- on décale la fenêtre de copie (7) avec le champ de substitution (8), pixel par pixel, sur la face d'impression noir/blanc (4),
- dans chaque position de la fenêtre sur le côté d'impression noir/blanc (4), on compare les valeurs de densité (D_{U}) des pixels (3) appartenant à la fenêtre de copie (7), avec la valeur de densité (D_{Z}) du champ de substitution (8),
- dans chaque fenêtre de position sur la page d'impression noir/blanc (4) pour le pixel (3) du champ de substitution (8), en fonction de la nature fixée de la variation de grandeur, pour la caractéristique positive/négative déterminée pour le pixel (3) du champ de substitution (8) et à partir de la comparaison de densités, on décide si la valeur de densité (D_{Z}) du champ de substitution (8) peut être ou non remplacée par une valeur de densité caractéristique (D_{U}) des pixels (3) de la fenêtre de copie (7), ou par une partie de celle-ci, et
- dans chaque position de fenêtre sur le côté d'impression noir/blanc (4) on remplace le cas échéant la valeur de densité (D_{z}) du champ de substitution (8).

2. Procédé selon la revendication 1,
caractérisé en ce que
pour un élargissement d'éléments de traits positifs (5) ou un rétrécissement d'éléments de traits négatifs (5), dans chaque position de fenêtre sur le côté d'impression noir/blanc (4), on remplace la valeur de densité (D_{Z}) du pixel (3) du champ de substitution (8), par une valeur de densité caractéristique (D_{U}) du pixel (3) du champ de copie (7) opposé, si, lors de la comparaison des valeurs de densité, on constate que la valeur de densité (D_{U}) d'au moins un pixel (3) de la fenêtre de copie (7) est plus grande que la valeur de densité (D_{Z}) du champ de substitution (8).

3. Procédé selon la revendication 2,
caractérisé en ce que
la valeur de densité caractéristique est la valeur maximale des valeurs de densité (D_{U}) des pixels (3) de la fenêtre de copie (7).

4. Procédé selon la revendication 1,
caractérisé en ce que
pour une extension des éléments de traits négatifs ou un rétrécissement des éléments de traits positifs, dans chaque position de la fenêtre sur la page d'impression noir/blanc (4), on remplace la valeur de densité (D_{Z}) du pixel (3) du champ de substitution (8), par une valeur de densité caractéristique (D_{U}) des pixels (3) de la fenêtre de copie (7) au cas où, lors d'une comparaison des valeurs de densité, on constate qu'au moins une valeur de densité (D_{U}) des pixels (3) de la fenêtre de copie (7) est inférieurc à la valeur de densité (D_{Z}) du champ de substitution (8).

5. Procédé selon la revendication 4,
caractérisé en ce que
la valeur de densité caractéristique est la valeur minimale des valeurs de densité (D_{U}) des pixels (3) de la fenêtre de copie (7).

6. Procédé selon l'une quelconque des revendications 1 à 5,
caractérisé en ce que
pour déterminer la caractéristique positive/négative des différents pixels (3) d'une page d'impression noir/blanc (4)
- on définit une fenêtre de décision (1) entourant plusieurs pixels (3) et on la déplace par-dessus la page d'impression noir/blanc (4),
- dans chaque fenêtre de position sur la page d'impression noir/blanc (4), on détermine la répartition de la fréquence des valeurs de densité (D) des pixels (3) tombant dans la fenêtre de décision (1), comme histogramme, et
- dans chaque position de fenêtre sur la page d'impression noir/blanc (4), par exploitation de l'histogramme, on détermine la caractéristique positive/négative d'au moins un pixel (3) qui tombe dans la fenêtre de décision (1).

7. Procédé selon la revendication 6,
caractérisé en ce qu'
à l'exploitation des histogrammes on reconnaît comme positif un élément de trait (5) situé dans la fenêtre de décision (1) si, dans la fenêtre de décision (1), les valeurs de densité (D_{H}) du fond de la page d'impression noir/blanc (4) sont inférieures aux autres valeurs de densité (D_{S}), et si la fréquence des valeurs de densité (D_{H}) du fond est supérieure par comparaison avec la fréquence des autres valeurs de densité (Ds).

8. Procède selon la revendication 6,
caractérisé en ce qu'
à l'exploitation des histogrammes on reconnaît comme négatif un élément de trait (5) situé dans la fenêtre de décision (1) si, dans la fenêtre de décision (1), les valeurs de densité (D_{H}) du fond de la page d'impression noir/blanc (4) sont supérieures aux autres valeurs de densité (D_{S}), et si la fréquence des valeurs de densité (D_{H}) du fond est inférieure par comparaison avec la fréquence des autres valeurs de densité (D_{S}).

9. Procédé de modification de la taille d'éléments de traits positifs et/ou négatifs, notamment de signes d'écriture sur une page d'impression en couleurs à reproduire, disponible sous la forme d'extraits de couleurs, chaque extrait de couleur étant divisé en pixels et à chaque pixel étant associée une valeur d'extrait de couleur (C, M, Y, K) représentant la composante respective de couleur,
caractérisé en ce qu'
- on fixe la nature de la variation de taille (agrandissement/rétrécissement) des éléments de traits de (5),
- chaque pixel (3) des différents extraits de couleur pour le côté d'impression en couleurs, est examiné par l'exploitation des composantes de couleur pour savoir s'il fait partie d'un élément de trait positif ou négatif (5),
- pour chaque pixel (3), qui fait partie d'un élément de trait positif ou négatif (5), on détermine une caractéristique positive ou une caractéristique négative correspondante,
- pour définir une fenêtre de copie (7) à partir d'un champ de substitution (8) composé d'au moins un pixel (3), on définit son extension pour l'importance souhaitée à l'agrandissement et/ou au rétrécissement des éléments de trait (5),
- la fenêtre de copie (7) est déplacée avec le champ de substitution (8), pixel par pixel, séparément sur les différents extraits de couleur,
- dans chaque position de la fenêtre sur chacun des extraits de couleur, on compare les valeurs d'extrait de couleur correspondantes (C_{U}, M_{U}, Y_{U}, K_{U}) des pixels (3) tombant dans la fenêtre de copie (7), avec l'extrait de couleur correspondant (C_{Z}, M_{Z}, Y_{Z}, K_{Z}) du champ de substitution (8),
- dans chaque position de fenêtre sur chacun des extraits de couleur pour le pixel (3) du champ de substitution (8), en fonction de la nature fixée de la modification de taille, à partir de la caractéristique positive/négative déterminée pour le pixel (3) du champ de substitution (9) et avant le résultat de la comparaison des valeurs d'extrait de couleur, on détermine si la valeur d'extrait de couleur (C_{Z}, M_{Z}, Y_{Z}, K_{Z}) du champ de substitution (8) doit être remplacée par une valeur d'extrait de couleur caractéristique (C_{U}, M_{U}, Y_{U}, K_{U}) des pixels (3) de la fenêtre de copie (7), ou par une fraction de celle-ci, et
- dans chaque position de fenêtre dans au moins l'un des extraits de couleur, on remplace le cas échéant la valeur de l'extrait de couleur correspondante (C_{Z}, M_{Z}, Y_{Z}, K_{Z}) du champ de substitution (8).

10. Procédé selon la revendication 9,
caractérisé en ce qu'
en cas d'élargissement des éléments de traits positifs (5) ou d'un rétrécissement des éléments de traits négatifs (5), dans chaque position de fenêtre sur chacun des extraits de couleur, on remplace la valeur d'extrait de couleur (C_{Z}, M_{Z}, Y_{Z}, K_{Z}) du pixel (3) du champ de substitution (8), par une valeur d'extrait de couleur caractéristique (C_{U}, M_{U}, Y_{U}, K_{U}) des pixels de la fenêtre de copie (7) si, à la comparaison des extraits de couleur, on décide que la valeur d'extrait de couleur (C_{U}, M_{U}, Y_{U}, K_{U}) d'au moins un pixel (3) de la fenêtre de copie (7) est supérieure à la valeur d'extrait de couleur (C_{Z}, M_{Z}, Y_{Z}, K_{Z}) du champ de substitution (8).

11. Procédé selon la revendication 10,
caractérisé en ce que
la valeur d'extrait de couleur caractéristique est la valeur maximale des valeurs d'extrait de couleur (C_{U}, M_{U}, Y_{U}, K_{U}) des pixels (3) de la fenêtre de copie (7).

12. Procédé selon la revendication 9,
caractérisé en ce qu'
en cas d'élargissement des éléments de traits négatifs ou de rétrécissemcnt des éléments de traits positifs, dans chaque position de fenêtre sur chacun des extraits de couleur, on remplace la valeur de densité (D_{Z}) du pixel (3) du champ de substitution (8), par une valeur d'extrait de couleur caractéristique (C_{U}, M_{U}, Y_{U}, K_{U}) des pixels (3) de la fenêtre de copie (7) si, à la comparaison des valeurs d'extrait de couleur, on constate qu'au moins une valeur d'extrait de couleur (C_{U}, M_{U}, Y_{U}, K_{U}) des pixels (3) de la fenêtre de copie (7) est inférieure à la valeur d'extrait de couleur (C_{Z}, M_{Z}, Y_{Z}, K_{Z}) du champ de substitution (8).

13. Procédé selon la revendication 12,
caractérisé en ce que
la valeur d'extrait de couleur caractéristique est la valeur minimale des valeurs d'extrait de couleur (C_{U}, M_{U}, Y_{U}, K_{U}) des pixels (3) de la fenêtre de copie (7).

14. Procédé selon l'une quelconque des revendications 9 à 13,
caractérisé en ce que
pour déterminer les caractéristiques positives/négatives des pixels (3) des différents extraits de couleur
- on définit une fenêtre de décision (1) comprenant plusieurs pixels (3) et on la fait passer séparément sur les différents extraits de couleur,
- dans chaque position de la fenêtre sur chacun des extraits de couleur, on détermine la répartition de la fréquence des valeurs d'extrait de couleur (C, M, Y, K) des pixels (3) tombant dans la fenêtre de décision (1), comme histogramme séparé (H_{C}, H_{M}, H_{Y}, H_{K}), et
- dans chaque position de fenêtre, sur chacun des extraits de couleur, par exploitation des différents histogrammes (H_{C}, H_{M}, H_{Y}, H_{K}), on détermine la caractéristique positive/négative d'au moins un pixel (3) tombant chaque fois dans la fenêtre de décision (1).

15. Procédé selon l'une quelconque des revendications 9 à 13,
caractérisé en ce que
pour déterminer les caractéristiques positives/négatives des pixels (3) des différents extraits de couleur
- on déplace séparément une fenêtre de décision (1) comprenant plusieurs pixels (3), de manière définie, et on glisse séparément par-dessus les différents extraits de couleur,
- dans chaque position de fenêtre sur chaque extrait de couleur, on détermine les répartitions de fréquence des valeurs d'extrait de couleur (C, M, Y, K) des pixels (3) tombant dans la fenétre de décision (1), comme histogrammes distincts (H_{C}, H_{M}, H_{Y}, H_{K}),
- on pondère les valeurs d'extrait de couleur (C, M, Y, K) des différents extraits de couleur, avec des coefficients de correction différents (G_{C}, G_{M}, G_{Y}, G_{K}),
- par addition des valeurs de densité de couleur pondérées (C*, M*, Y*, K*), on détermine un histogramme global (H_{CMYK}) pour tous les extraits de couleur, et
- dans chaque position de fenêtre, par exploitation de l'histogramme global (H_{CMYK}), on détermine la caractéristique positive/négative d'au moins l'un des pixels (3) tombant chaquc fois dans la fenêtre de décision (1).

16. Procédé selon l'une des revendications 1 à 15,
caractérise en ce que
le champ de substitution (8) se situe au centre de la fenêtre de copie (7).

17. Procédé selon l'une quelconque des revendications 1 à 16,
caractérisé en ce que
les caractéristiques positives/négatives se déterminent avant la variation de taille des éléments de traits (5).

18. Procédé selon l'une quelconque des revendications 1 à 17,
caractérisé en ce que
- la fenêtre de décision (1) est déplacée pixel par pixel, et
- dans chaque fenêtre de position, par exploitation des histogrammes correspondants, on détermine la caractéristique positive/négative d'au moins un pixel (3) tombant dans la fenêtre de décision (1).

19. Procédé selon l'une quelconque des revendications 1 à 17,
caractérisé en ce qu'
- on déplace pixel par pixel la fenêtre de décision (1),
- dans chaque position de la fenêtre, par l'exploitation des histogrammes concernés, on détermine la caractéristique positive/négative d'un pixel (3) qui est arrivé dans la fenêtre de décision (1), et
- on transmet la caractéristique positive/négative obtenue sur tous les pixels de la fenêtre de décision (1).

20. Procédé selon l'une quelconque des revendications 1 à 17,
caractérisé en ce que
- dans la fenêtre de décision (1) on définit un champ de caractéristiques (2), central, comprenant au moins un pixel (3),
- on décale pixel par pixel la fenêtre de décision (1), et
- dans chaque position de la fenêtre, on détermine la caractéristique positive/négative pour le pixel (3) tombant dans la fenêtre (2).

21. Procédé selon l'une quelconque des revendications 1 à 17,
caractérisé en ce que
- dans la fenêtre de décision (1) on définit au moins un pixel (3) se trouvant dans le champ de caractéristiques central,
- on déplace la fenêtre de décision (1) chaque fois sur son extension,
- dans chaque position de la fenêtre, on détermine la caractéristique positive/négative du pixel (3) tombant dans le champ de caractéristiques correspondant, et
- au pixel (3) situé dans l'intervalle, on associe les caractéristiques positives/négatives déterminées pour les positions respectives de la fenêtre.

22. Procédé selon l'une des revendications 1 a 17,
caractérisé en ce que
- dans la fenêtre de décision (1) on définit un champ de caractéristiques (2), central, comprenant au moins un pixel (3),
- on déplace en chevauchement respectif la fenêtre de décision (1),
- dans chaque position de la fenêtre, on détermine la caractéristique positive/négative pour le pixel (3) tombant dans le champ de caractéristiques respectif (2), et
- aux pixels intermédiaires (3) on associe les caractéristiques positives/négatives obtenues à l'aide des positions respectives de la fenêtre.
